# EUROPEAN PATENT APPLICATION

(11) **EP 4 734 211 A1**
(43) Date of publication of application: **29.04.2026**
(21) Application number: 24832397.4
(22) Date of filing: 25.06.2024
(51) Int. Cl.: H01M 10/0562, H01M 10/052, H01M 4/134, H01M 4/136, H01M 4/62

(54) **SUPERIONIC CONDUCTOR AND ELECTROCHEMICAL CELL COMPRISING SAME**

(30) Priority: 26.06.2023 KR 20230081800; 31.10.2023 KR 20230148378
(71) Applicant: Libest Inc., Daejeon 34002 (KR); Gwangju Institute of Science and Technology, Gwangju 61005 (KR)
(72) Inventor: KIM, Sang Ryun, Gwangju 61005 (KR); KANG, Seoung Jae, Gwangju 62274 (KR); KIM, Joo Seong, Sejong 30147 (KR); LIM, Seung Gyu, Gwangju 61424 (KR); KIM, Seon Kyong, Daejeon 34304 (KR); CHOI, Seong Jin, Gwangju 62279 (KR)
(74) Representative: Brann AB
(86) International application number: PCT/KR2024/008787
(87) International publication number: WO 2025/005619

(57) **Abstract**

A first aspect of the present disclosure provides an oxyhydride-based superionic conductor that is a composite including: a complex hydride containing a cation including an alkali metal or an alkaline earth metal and a hydride-based complex anion; and a metal oxide. When the superionic conductor of the present disclosure is used as a solid electrolyte in an all-solid-state secondary battery, there can be provided an all-solid-state battery having significantly improved energy density, power, and stability.

## Description

### TECHNICAL FIELD

The present disclosure relates to a superionic conductor and an electrochemical cell comprising the same.

### BACKGROUND

Electrochemical cells employing solid electrolytes are considered promising candidates for overcoming inherent drawbacks, such as electrolyte leakage, flammability, and limited energy density, associated with conventional lithium-ion batteries employing liquid-based electrolytes. Among the three principal components of an electrochemical cell, the electrolyte needs to exhibit essential properties including ionic conductivity and electrochemical stability in contact with the electrode. Various solid ionic conductors have been investigated as solid electrolyte materials such as oxide-based compounds, sulfide-based compounds, and polymer-based compounds. In particular, sulfide-based solid electrolytes have been developed and have attracted attention due to their relatively high ionic conductivity. However, sulfide-based electrolytes are reactive with moisture, resulting in the generation of hydrogen sulfide, a toxic gas, and in the degradation of ionic conductivity. Further, sulfide-based electrolytes exhibit a relatively poor reducing property, leading to low electrochemical stability at low potentials. Accordingly, there exists a need for a novel solid ionic conductor that does not generate toxic substances or gases and that exhibits excellent electrochemical stability as well as stable and high ionic conductivity at room temperature.

### PRIOR ART DOCUMENT

Patent Document 1: Korean Patent Laid-open Publication No. 10-2020-0053099

### DISCLOSURE OF THE INVENTION

### PROBLEMS TO BE SOLVED BY THE INVENTION

The present disclosure is conceived to provide a superionic conductor which is stable and excellent in ionic conductivity at room temperature, a method for preparing the same, and an electrochemical cell including the same.

However, the problems to be solved by the present disclosure are not limited to the above-described problems. Although not described herein, other problems to be solved by the present disclosure can be clearly understood by a person with ordinary skill in the art from the following descriptions.

### MEANS FOR SOLVING THE PROBLEMS

A first aspect of the present disclosure provides an oxyhydride-based superionic conductor that is a composite including: a complex hydride containing a cation including an alkali metal or an alkaline earth metal and a hydride-based complex anion; and a metal oxide.

A second aspect of the present disclosure provides a method for preparing an oxyhydride-based superionic conductor that is a composite of a complex hydride and a metal oxide, including: (a) a process of mixing, at a predetermined molar ratio, the complex hydride containing a cation including an alkali metal or an alkaline earth metal and a hydride-based complex anion with the metal oxide; and (b) a process of inducing a reaction between the complex hydride and the metal oxide through a first milling process in which the mixture is mechanically milled.

A third aspect of the present disclosure provides an electrochemical cell including: a cathode; an anode; and a solid electrolyte containing the superionic conductor according to the first aspect, the solid electrolyte being disposed between the cathode and the anode.

### EFFECTS OF THE INVENTION

A superionic conductor according to an embodiment of the present disclosure is an oxyhydride-based ionic conductor that is a composite formed through a reaction between a complex hydride and a metal oxide. The superionic conductor maintains, even at room temperature, a high-temperature phase of the complex hydride in a stable manner and thus exhibits excellent ionic conductivity at room temperature without generating toxic substances. Further, the superionic conductor of the present disclosure exhibits excellent stability with respect to metals, such as Li or Na, as well as superior thermal stability and processability. Accordingly, when the superionic conductor of the present disclosure is used as a solid electrolyte in an all-solid-state secondary battery, there can be provided an all-solid-state battery having significantly improved energy density, power, and stability.

Furthermore, the superionic conductor of the present disclosure can be prepared by a simple process of mechanically milling a mixture of a complex hydride and a metal oxide. Therefore, the superionic conductor is advantageous for mass production and economically favorable in preparation.

### BRIEF DESCRIPTION OF THE DRAWINGS

**FIGS. 1A****,** **FIG. 1B****,** **FIG. 1C****,** **FIG. 1D****,** and **FIG. 1E** are diagrams respectively illustrating results of changes in ionic conductivity with temperature for ionic conductors of Example 4 and Example 14, Example 6 and Example 16, Example 7 and Example 17, Example 8 and Example 18, and Comparative Example 2 and Comparative Example 4 compared with Comparative Example 1 and Comparative Example 3.
**FIG. 2** is a diagram illustrating results of changes in ionic conductivity with temperature for ionic conductors depending on the mixing ratio of a metal oxide according to an embodiment.
**FIGS. 3A, FIG. 3B****,** and **FIG. 3C** are diagrams respectively illustrating XRD measurement results of the superionic conductors of Example 4, Example 2, and Example 1 compared with Comparative Example 1 (LiCB₁₁H₁₂).

### BEST MODE FOR CARRYING OUT THE INVENTION

Hereafter, embodiments will be described in detail with reference to the accompanying drawings so that the present disclosure may be readily implemented by a person with ordinary skill in the art. However, it is to be noted that the present disclosure is not limited to the embodiments but can be embodied in various other ways. In the drawings, parts irrelevant to the description are omitted for the simplicity of explanation, and like reference numerals denote like parts throughout the whole document.

Throughout the whole document, the term "on" that is used to designate a position of one element with respect to another element includes both a case that the one element is adjacent to the other element and a case that any other element exists between these two elements.

Further, throughout the whole document, the term "comprises or includes" and/or "comprising or including" used in the document means that one or more other components, steps, operation and/or existence or addition of elements are not excluded in addition to the described components, steps, operation and/or elements unless context dictates otherwise. Throughout the whole document, the term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party. Throughout the whole document, the term "step of" does not mean "step for."

Throughout the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Throughout the whole document, a phrase in the form "A and/or B" means "A or B, or A and B."

Hereafter, embodiments and examples of the present disclosure will be described in detail with reference to the accompanying drawings. However, the present disclosure may not be limited to the following embodiments, examples, and drawings.

A first aspect of the present disclosure provides an oxyhydride-based superionic conductor that is a composite of a complex hydride and a metal oxide, including: the complex hydride containing a cation including an alkali metal or an alkaline earth metal and a hydride-based complex anion; and a metal oxide.

Herein, the complex hydride may be an ionic conductor having ionic conductivity due to the presence of a complex anion containing hydrogen, and the term "complex hydride" may also be referred to as a "complex metal hydride."

Specifically, the oxyhydride-based superionic conductor, which is a composite synthesized by a reaction between the complex hydride and the metal oxide, may form a defect (for example, Li⁺ defect) within the crystal structure of the complex hydride by a reaction of the two materials. The formation of such a defect within the crystal structure of the complex hydride may generate a space charge layer, thereby increasing the degree of crystal disorder. Accordingly, the superionic conductor of the present disclosure may remain stable in a high-temperature phase even at room temperature. Thus, the superionic conductor of the present disclosure can exhibit significantly higher ionic conductivity at room temperature than conventional complex hydrides.

Conventional complex hydrides, such as LiBH₄, have been reported to exhibit high lithium ion conductivity at high temperatures. However, their ionic conductivity drastically decrease at room temperature, which imposes significant limitations for practical use as solid electrolytes. In contrast, as described above, the superionic conductor of the present disclosure can exhibit excellent ionic conductivity even at room temperature and thus can be used as a solid electrolyte for electrochemical cell.

In an embodiment of the present disclosure, the composite, i.e., the superionic conductor, may form defects of metal cations within the crystal structure of the complex hydride by a reaction between the complex hydride and the metal oxide, thereby increasing the degree of crystal disorder. As a result, the superionic conductor of the present disclosure may remain stable in a high-temperature phase even at room temperature and thus can exhibit excellent ionic conductivity compared with conventional complex hydrides.

In an embodiment of the present disclosure, the composite may be heat treated. The oxyhydride-based superionic conductor synthesized by a reaction between the complex hydride and the metal oxide can be prepared by a simple process such as mechanical milling. Then, the oxyhydride-based superionic conductor subjected to heat treatment may exhibit higher ionic conductivity than one without heat treatment. The mechanical milling and heat treatment will be described in more detail in the second aspect of the present disclosure.

In an embodiment of the present disclosure, a molar ratio of the complex hydride to the metal oxide in the composite may be 1:0.01 to 20, 1:0.05 to 10, 1:0.1 to 10, 1:0.1 to 7, 1:0.1 to 5, 1:0.1 to 3, 1:0.1 to 2, or 1:0.1 to 1.

When the molar ratio of the complex hydride to the metal oxide is less than 1:0.01, the effect of maintaining the degree of structural disorder of the complex hydride becomes insignificant, thereby limiting the improvement of ionic conductivity at room temperature. When the molar ratio exceeds 1:20, the ionic conductivity of the composite, i.e., the superionic conductor, may deteriorate. Thus, preferably, the molar ratio of the complex hydride to the metal oxide falls within the above-described range.

Specifically, the oxyhydride-based superionic conductor may be represented by (1-α)Mx(M'yHz)-αK, where Mx(M'yHz) is the complex hydride, K is the metal oxide, a is 0.1 to 0.9, x is 1 or 2, y is 1 ≤ y ≤ 15, and z is 1 ≤ z ≤ 15.

Herein, α is a parameter representing the molar ratio. The composite may have different ionic conductivity depending on the molar ratio of the complex hydride to the metal oxide. The present disclosure provides an optimal ratio that facilitates stable and excellent ionic conductivity at room temperature.

In an embodiment of the present disclosure, the metal oxide may be used without limitation as long as, through reaction with the complex hydride as described above, it can increase the degree of structural disorder caused by a defect within the lattice of the complex hydride compared with that before the reaction.

By way of non-limiting example, the metal oxide may include one or more selected from TiO₂, ZnO, CuO, CaO, SiO₂, Al₂O₃, MgO, and ZrO₂. Specifically, the metal oxide may include one or more selected from SiO₂, Al₂O₃, MgO, and ZrO₂. However, the present disclosure is not limited by the type of metal oxide.

In an embodiment of the present disclosure, the complex anion contained in the complex hydride may include one or more selected from BH₄⁻ , B₆H₆²⁻, B₁₀H₁₀²⁻, B₁₁H₁₁²⁻, B₁₂H₁₂²⁻, CB₉H₁₀⁻, CB₁₀H₁₁⁻, and CB₁₁H₁₂⁻. Specifically, the complex anion may include one or more selected from CB₉H₁₀⁻, CB₁₁H₁₂⁻, and B₁₂H₁₂²⁻. More specifically, the complex anion may be CB₁₁H₁₂⁻.

As an example, as described above, the complex hydride contains a cation including an alkali metal or an alkaline earth metal, together with the above-described hydride-based complex anion. The cation may include one or more selected from Na, Li, Mg, Ca, K, and Cs. Specifically, the cation may be Li or Na. More specifically, the cation may be Li.

In an embodiment of the present disclosure, the superionic conductor described above may exhibit a first peak at a diffraction angle of 2θ=15.9±0.5° and a second peak at a diffraction angle of 2θ=45±5° in an X-ray diffraction pattern as measured using CuKα radiation. Herein, the X-ray diffraction pattern may be measured at 25°C.

Specifically, the first peak may originate from the complex hydride included in the superionic conductor and may be located at a diffraction angle 2θ smaller by 0.01° or more, 0.02° or more, 0.03° or more, 0.04° or more, 0.05° or more, or 0.06° or more than the diffraction angle 2θ (15.9±0.5°) of the complex hydride before reaction with the metal oxide. While no upper limit is imposed, the first peak may be located at a diffraction angle 2θ smaller by 0.5° or less, specifically 0.3° or less, and more specifically 0.12° or less, than the diffraction angle 2θ of the complex hydride before reaction with the metal oxide.

More specifically, as the first peak in the X-ray diffraction pattern is located at a 2θ value satisfying the above conditions, the superionic conductor may exhibit excellent ionic conductivity even at room temperature. As described above, the reaction between the complex hydride and the metal oxide may induce lattice expansion of the complex hydride before reaction. Accordingly, it can be understood that a cation defect is formed in the complex hydride before reaction, and that the formation of such a cation defect increases the degree of structural disorder of the complex hydride. As a result, the increased degree of structural disorder leads to an increase in entropy, thereby lowering a phase transition temperature to the high-temperature phase of the complex hydride with excellent ionic conductivity. Thus, the superionic conductor may exhibit excellent ionic conductivity even at room temperature.

Further, the metal oxide contained in the superionic conductor increases the degree of structural disorder of the complex hydride, and effectively maintains the increased degree of structural disorder. Thus, the superionic conductor of the present disclosure can exhibit stable and high ionic conductivity at room temperature.

In an embodiment of the present disclosure, the cation defect formed within the complex hydride included in the superionic conductor may be, for example, a Li⁺ defect.

Furthermore, the superionic conductor of the present disclosure may further exhibit a third peak at a diffraction angle of 2θ=18.2±0.5° in the X-ray diffraction pattern, in addition to the above-described first peak. Herein, the third peak may be located at a diffraction angle 2θ smaller than the diffraction angle 2θ (18.2±0.5°) of the complex hydride before reaction with the metal oxide. In this case, the difference in diffraction angle 2θ between the third peak of the superionic conductor and that of the complex hydride before reaction with the metal oxide may correspond to, or be substantially identical to, the range by which the first peak of the superionic conductor is shifted relative to that of the complex hydride before reaction with the metal oxide.

In an embodiment of the present disclosure, the second peak in the range of 2θ=45±5° may originate from the metal oxide.

For example, an intensity ratio (I₁/I₂) between a maximum intensity (I₁) of the first peak and a maximum intensity (I₂) of the second peak may be 1 to 100, 1 to 80, 1 to 60, 1 to 50, 1 to 40, 1 to 30, 1 to 20, 2 to 20, 3 to 20, 4 to 20, or 4 to 10. The maximum intensities of the first and second peaks may be calculated based on a minimum intensity in the X-ray diffraction pattern over a diffraction angle range of 2θ=10° to 80°.

As the intensity ratio (I₁/I₂) between the maximum intensity (I₁) of the first peak and the maximum intensity (I₂) of the second peak satisfies the above-described range, the superionic conductor can exhibit excellent ionic conductivity even at room temperature.

Also, the superionic conductor may further exhibit other peaks in addition to the second peak originating from the metal oxide. For example, such other peaks may be located at different diffraction angles 2θ depending on the type of metal oxide, and may include a plurality of distinct peaks independent of one another. By way of non-limiting example, such other peaks may include one or more peaks located in the diffraction angle ranges of 2θ=25±5°, 35±4.99°, 55±4.99°, and 70±10°. However, the present disclosure is not limited thereto, and other peaks may also be located outside the above-described ranges.

As described above, the oxyhydride-based superionic conductor of the present disclosure is a composite of the complex hydride and the metal oxide, synthesized by a reaction of the two materials, thereby exhibiting the above-described characteristics. Accordingly, it should be regarded as a different material from a simple mixture of the complex hydride and the metal oxide. That is, the effect of the oxyhydride-based superionic conductor of the present disclosure exhibiting excellent ionic conductivity at room temperature cannot be achieved by a simple mixture of the complex hydride and the metal oxide.

Hereafter, a method for preparing the oxyhydride-based superionic conductor, which is a composite of the complex hydride and the metal oxide, will be described in detail.

A second aspect of the present disclosure provides a method for preparing an oxyhydride-based superionic conductor that is a composite of a complex hydride and a metal oxide, including: (a) a process of mixing, at a predetermined molar ratio, the complex hydride containing a cation including an alkali metal or an alkaline earth metal and a hydride-based complex anion with the metal oxide; and (b) a process of inducing a reaction between the complex hydride and the metal oxide through a first milling process in which the mixture is mechanically milled.

Specifically, the oxyhydride-based superionic conductor according to the present disclosure may be prepared by mechanically milling a mixture of the metal oxide and the complex hydride including the cation including the alkali metal or the alkaline earth metal and the hydride-based complex anion at a predetermined molar ratio and inducing a reaction between the complex hydride and the metal oxide. Accordingly, the oxyhydride-based superionic conductor can be prepared by a simple process and thus is advantageous for mass production and economically favorable in preparation.

Herein, the complex hydride and the metal oxide mixed in the process (a) are the same as those described above. Thus, a detailed description thereof will be omitted.

In the above-described process (a), the complex hydride and the metal oxide may be mixed to satisfy the above-described molar ratio.

In an embodiment of the present disclosure, the first milling process in the process (b) may be performed by any conventional method.

By way of non-limiting example, the first milling process may be performed using a bead mill, a ball mill, a high-energy ball mill, a planetary mill, a stirred ball mill, or a vibration mill, but is not limited thereto.

For example, the first milling process may be performed for 0.1 hour to 20 hours or 0.5 hours to 10 hours under conditions of 100 rpm to 500 rpm using a high-energy ball mill in an inert atmosphere. If the first milling process is performed for less than 0.1 hour, no reaction occurs between the mixed complex hydride and the metal oxide, thereby limiting the improvement of ionic conductivity at room temperature. If the process is performed more than 20 hours, the improvement in ionic conductivity may not justify the lack of economic efficiency in preparation. Thus, preferably, the first milling process is performed within the above-described time range.

Further, the first milling process may be performed as a dry or wet process. In the case of a wet process, the milling process may be performed by adding a solvent to the mixture and subsequently removing the solvent. Examples of the solvent include acetonitrile, tetrahydrofuran, diethyl ether, N,N-dimethylformamide, N,N-dimethylacetamide, methanol, ethanol, or mixtures thereof, but are not limited thereto.

In an embodiment of the present disclosure, the method may further include a second milling process of mechanically milling the complex hydride prior to the mixing process (a).

By performing the second milling process, the degree of structural disorder of the complex hydride can be further increased, and the complex hydride can be pulverized to a nanosized scale, thereby facilitating its reaction with the metal oxide in the above-described first milling process. That is, as the specific surface area of the nanosized complex hydride increases, the reaction area with the metal oxide in the first milling process can be enlarged, thereby further improving the ionic conductivity of the finally obtained oxyhydride-based superionic conductor at room temperature.

For example, after the second milling process, the size of the complex hydride may be 1 nm to 1000 nm, 1 nm to 800 nm, 1 nm to 700 nm, 1 nm to 600 nm, or 1 nm to 500 nm.

In an embodiment of the present disclosure, the second milling process may be performed in a similar manner to the above-described first milling process. However, the second milling process may be performed under high-speed rotation for 1 hour to 100 hours, 5 hours to 80 hours, or 10 hours to 50 hours compared with the first milling process. For example, the second milling process may be performed at 200 rpm to 800 rpm for the above-described time range.

In an embodiment of the present disclosure, the method may further include a process of heat treating the obtained composite after the process (b).

The heat treating process may facilitate the improvement of ionic conductivity of the superionic conductor.

In this case, after the process (b), the obtained composite may be heat treated, and a pelletized composite formed by pressing the obtained composite may also be heat treated.

In an embodiment of the present disclosure, the heat treatment may be performed at a temperature in the range of 60°C to 300°C, specifically 100°C to 250°C, and more specifically 150°C to 250°C, for 0.01 hour to 50 hours.

A third aspect of the present disclosure provides a solid electrolyte for electrochemical cell, including the above-described superionic conductor. Herein, the solid electrolyte may be a solid electrolyte for all-solid-state battery.

By way of non-limiting example, the solid electrolyte may be composed solely of the above-described superionic conductor, and may further contain a binder. Further, the solid electrolyte may further include one or more solid electrolytes selected from oxide-based solid electrolytes, sulfide-based solid electrolytes, polymer-based solid electrolytes, and phosphate compound solid electrolytes known in the art, in addition to the superionic conductor of the present disclosure.

A fourth aspect of the present disclosure provides an electrochemical cell including: a cathode; an anode; and a solid electrolyte containing the superionic conductor according to the first aspect, the solid electrolyte being disposed between the cathode and the anode. An electrochemical cell employing a solid electrolyte including a superionic conductor that exhibits excellent ionic conductivity at room temperature may implement an all-solid-state battery having improved energy density, power, and stability.

In an embodiment of the present disclosure, the cathode may include a cathode current collector and a cathode mixture containing a cathode active material. The cathode mixture may be coated on the cathode current collector. The cathode mixture may be coated on one surface or both surfaces of the cathode current collector.

For example, the cathode current collector on which the cathode mixture is coated is not particularly limited as long as it does not cause a chemical change in the battery and has high conductivity. For example, the cathode current collector may include stainless steel, aluminum, nickel, calcined carbon, or aluminum or stainless steel having a surface treated with carbon, nickel, titanium, silver, or the like. Further, the cathode current collector may be used in various forms such as a film, sheet, foil, net, porous body, foam body, or nonwoven body, but is not limited by the type of cathode current collector.

In an embodiment of the present disclosure, the cathode active material contained in the cathode mixture may include one or more selected from sulfide-based active materials and oxide-based active materials.

For example, the sulfide-based active material may be inorganic sulfur (S₈), a sulfur-based compound, or a mixture thereof. The sulfur-based compound may include one or more selected from the group consisting of metal sulfides (MₓS_{y}, M=Li, Ni, Co, Cu, Fe, Mo, Ti, Nb, 1≤x≤4, 1≤y≤8), organosulfur compounds, and carbon-sulfur polymers ((C₂Sₓ)ₙ:x=2.5-50, n≥2).

The oxide-based active material may be, for example, a halite-layer-type active material, such as LiCoO₂, LiMnO₂, LiNiO₂, LiVO₂, or Li₁₊ₓNi_{1/3}Co_{1/3}Mn_{1/3}O₂, a spinel-type active material, such as LiMn₂O₄ or Li(Ni_{0.5}Mn_{1.5})O₄, an inverse-spinel-type active material, such as LiNiVO₄ or LiCoVO₄, an olivine-type active material, such as LiFePO₄, LiMnPO₄, LiCoPO₄, or LiNiPO₄, a silicon-containing active material, such as Li₂FeSiO₄ or Li₂MnSiO₄, a halite-layer-type active material having some of a transition metal substituted with a heterometal, such as LiNi_{0.8}Co_{(0.2-x)}AlₓO₂ (0<x<0.2), or a spinel-type active material having some of a transition metal substituted with a heterometal, such as Li₁₊ₓMn_{2-x-y}M_{y}O₄ (M is at least one selected from Al, Mg, Co, Fe, Ni, and Zn, and 0<x+y<2), but is not limited thereto.

In one embodiment, the cathode mixture containing the cathode active material may further contain an ionic conductor. The ionic conductor may be a hydride-based ionic conductor containing a cation including an alkali metal or an alkaline earth metal and a hydride-based complex anion. Specifically, the ionic conductor may be a hydride-based ionic conductor containing, as a complex anion, one or more selected from the group consisting of CB₁₁H₁₂⁻, B₁₂H₁₂²⁻, and CB₉H₁₀⁻, or may be the above-described superionic conductor.

Further, the cathode mixture may further contain a conductive material and a binder in addition to the cathode active material and the ionic conductor.

The conductive material may be any material known in the art that can form an electronic conduction path within the electrode. The conductive material may include sp² carbon materials, such as carbon black, conducting graphite, ethylene black, and carbon nanotubes, or graphene, but is not limited thereto.

The binder may be selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acryl rubber, butyl rubber, fluorine rubber, polytetrafluoroethylene, polyethylene, polypropylene, ethylene/propylene copolymers, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resins, phenolic resins, epoxy resins, carboxymethyl cellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, polymethacrylic acid, polymethacrylate, polyacrylamide, polyurethane, fluorinated polymer, chlorinated polymer, a salt of alginic acid, polyvinylidene fluoride, poly(vinylidene fluoride)-hexafluoropropene, and combinations thereof.

In an embodiment of the present disclosure, the anode may contain lithium metal. For example, the anode may contain lithium metal disposed on an anode current collector. Herein, the lithium metal may be present in the form of a thin film on the anode current collector. For example, the lithium thin film may be formed by depositing lithium metal on the anode current collector by a physical or chemical method, or by placing lithium foil or lithium powder on the anode current collector followed by rolling, but is not limited thereto. The lithium thin film may be disposed on one surface or both surfaces of the anode current collector.

For example, the anode current collector may be a metal selected from the group consisting of copper, aluminum, stainless steel, zinc, titanium, silver, palladium, nickel, iron, chromium, alloys thereof, and combinations thereof, but is not limited thereto.

Further, the anode may contain an anode active material conventionally used in the art.

For example, the anode active material may include one or more selected from the group consisting of carbon-based materials, silicon, silicon oxides, silicon alloys, silicon-carbon composites, tin, tin alloys, tin-carbon composites, metal oxides, or combinations thereof, but is not limited thereto.

By way of non-limiting example, the carbon-based material may be crystalline carbon, amorphous carbon, or a mixture thereof. The crystalline carbon may be graphite, such as natural graphite or artificial graphite that are in amorphous, plate, flake, spherical or fibrous form. The amorphous carbon may be soft carbon (carbon sintered at low temperatures), hard carbon, mesophase pitch carbides, sintered cokes, graphene, carbon black, fullerene soot, carbon nanotubes, and carbon fibers.

The anode may further contain a binder and a conductive material in addition to the anode active material. The binder and the conductive material may be the same as or similar to those described above. Thus, a detailed description thereof will be omitted.

In an embodiment of the present disclosure, the above-described superionic conductor may form an electrolyte layer positioned between the cathode and the anode. If necessary, the electrolyte layer may further contain a binder or a liquid.

Herein, the liquid may refer to a liquid electrolyte containing a lithium salt, which is widely used in lithium ion batteries. The present disclosure is not limited by the type of lithium salt contained in the liquid electrolyte and/or the composition of the liquid electrolyte.

The electrolyte layer may further include one or more selected from the group consisting of sulfide-based electrolytes, oxide-based electrolytes, and polymer-based electrolytes. However, if the electrolyte layer is configured as a plurality of layers, a solid electrolyte layer containing the above-described superionic conductor may be disposed adjacent to the anode.

### MODE FOR CARRYING OUT THE INVENTION

Hereinafter, the present disclosure will be explained in more detail with reference to Examples. However, the following Examples are illustrative only for better understanding of the present disclosure but do not limit the present disclosure.

### [Examples]

### (Example 1)

A raw material, Li[CB₁₁H₁₂]1/2H₂O, was subjected to high-vacuum heat treatment at a temperature of 100°C to 200°C under an Ar atmosphere and then subjected to a first ball milling process at 200 rpm to 800 rpm for 10 hours to 50 hours to obtain a Li[CB₁₁H₁₂] complex hydride having a nanometer size of 1 nm to 500 nm.

Thereafter, the obtained complex hydride and Al₂O₃ as a metal oxide were weighed and mixed at a molar ratio of Li[CB₁₁H₁₂]:Al₂O₃ =9:1 and then subjected to a second ball milling process at 100 rpm to 500 rpm for 0.5 hours to 10 hours to prepare an oxyhydride-based superionic conductor, which is a composite of the complex hydride and the metal oxide.

### (Example 2)

A superionic conductor was prepared in the same manner as in Example 1 except that a mixture having a molar ratio of Li[CB₁₁H₁₂]:Al₂O₃=6:4 was used.

### (Example 3)

A superionic conductor was prepared in the same manner as in Example 1 except that a mixture having a molar ratio of Li[CB₁₁H₁₂]:Al₂O₃=4:6 was used.

### (Example 4)

A superionic conductor was prepared in the same manner as in Example 1 except that a mixture having a molar ratio of Li[CB₁₁H₁₂]:Al₂O₃=2:8 was used.

### (Example 5)

A superionic conductor was prepared in the same manner as in Example 1 except that a mixture having a molar ratio of Li[CB₁₁H₁₂]:Al₂O₃=1:9 was used.

### (Example 6)

A superionic conductor was prepared in the same manner as in Example 1 except that SiO₂ was used as a metal oxide and a mixture having a molar ratio of Li[CB₁₁H₁₂]:SiO₂=2:8 was used.

### (Example 7)

A superionic conductor was prepared in the same manner as in Example 1 except that MgO was used as a metal oxide and a mixture having a molar ratio of Li[CB₁₁H₁₂]:MgO=1:9 was used.

### (Example 8)

A superionic conductor was prepared in the same manner as in Example 1 except that ZrO₂ was used as a metal oxide and a mixture having a molar ratio of Li[CB₁₁H₁₂]:ZrO₂=3:7 was used.

### (Example 9)

A superionic conductor was prepared in the same manner as in Example 2 except that Li[CB₉H₁₀]·1/2H₂O was used as a raw material.

### (Example 10)

A superionic conductor was prepared in the same manner as in Example 2 except that Li₂B₁₂H₁₂ was used as a raw material.

### (Example 11 to Example 20)

Each of the superionic conductors prepared in Examples 1 to 10 was subjected to heat treatment at 100°C to 200°C for 1 hour under an Ar atmosphere. The heat treated superionic conductors of Examples 1 to 10 correspond respectively to the superionic conductors of Examples 11 to 20.

### (Comparative Example 1)

A complex hydride, Li[CB₁₁H₁₂], which had not yet been mixed with a metal oxide and subjected to the first ball milling process as in Example 1, was obtained.

### (Comparative Example 2)

A complex hydride, Li[CB₁₁H₁₂], which had not yet been mixed with a metal oxide but had been subjected to the first ball milling process as in Example 1, was obtained.

### (Comparative Example 3 and Comparative Example 4)

Each of the complex hydrides prepared in Comparative Examples 1 and 2 was subjected to heat treatment in the same manner as in Example 11. The heat treated complex hydrides of Comparative Examples 1 and 2 correspond respectively to the complex hydrides of Comparative Examples 3 and 4.

### (Test Example 1) Comparative Analysis of Ionic Conductivity of Superionic Conductor

The prepared superionic conductors were comparatively analyzed in terms of ionic conductivity. In this case, the ionic conductivity was measured after each of the superionic conductors was compressed under a pressure of 100 MPa to 400 MPa to form pellets having a diameter of 10 mm and a thickness of 100 µm to 500 µm.

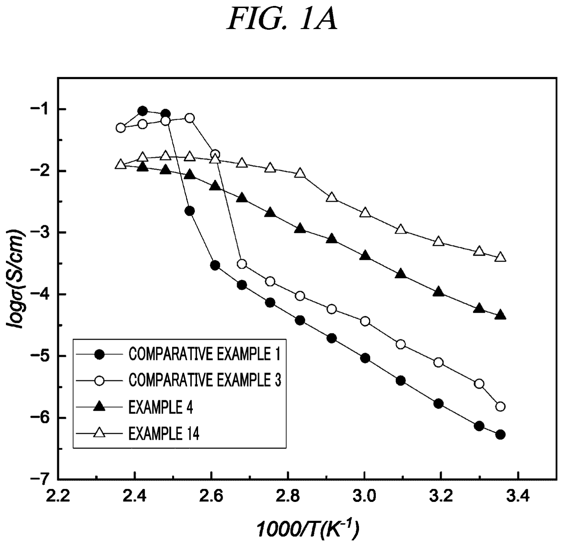

First, the ionic conductivity depending on the type of metal oxide was comparatively analyzed **(****FIG. 1A** to **FIG. 1E** and Table 1).

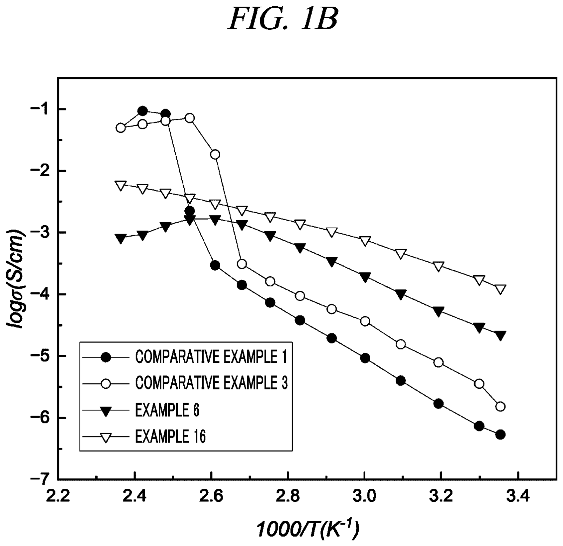

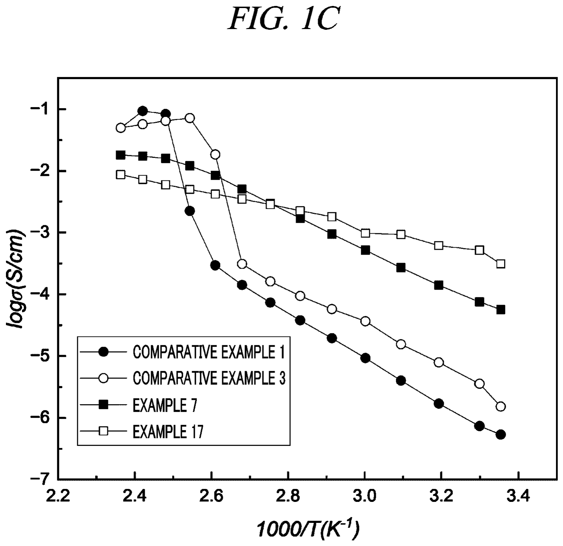

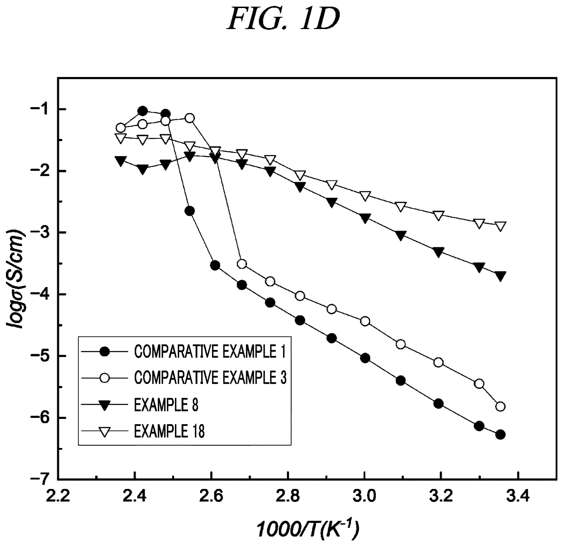

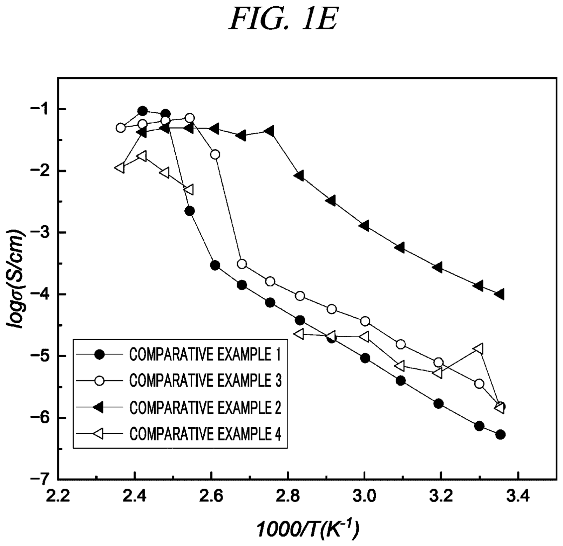

**FIG. 1A****,** **FIG. 1B****,** **FIG. 1C****,** **FIG. 1D****,** and **FIG. 1E** are Arrhenius plots respectively illustrating results of changes in ionic conductivity with temperature of Example 4 and Example 14, Example 6 and Example 16, Example 7 and Example 17, Example 8 and Example 18, and Comparative Example 2 and Comparative Example 4 compared with Comparative Example 1 and Comparative Example 3. The ionic conductivity at 25°C is summarized in Table 1 below.

**[Table 1]**

| Ionic conductivity at 25°C before heat treatment (S/cm) | | Ionic conductivity at 25°C after heat treatment (S/cm) | |
|---|---|---|---|
| Example 4 | 4.49 x 10⁻⁵ | Example 14 | 3.86 x 10⁻⁴ |
| Example 6 | 2.24 x 10⁻⁵ | Example 16 | 1.26 x 10⁻⁴ |
| Example 7 | 5.64 x 10⁻⁵ | Example 17 | 3.11 x 10⁻⁴ |
| Example 8 | 2.05 x 10⁻⁴ | Example 18 | 1.32 x 10⁻³ |
| Comparative Example 1 | 5.38 x 10⁻⁷ | Comparative Example 3 | 1.52 x 10⁻⁶ |
| Comparative Example 2 | 1.01 x 10⁻⁴ | Comparative Example 4 | 1.44 x 10⁻⁶ |

Referring to **FIG. 1A** to **FIG.** 1E, it is known that Li[CB₁₁H₁₂], which is one of the complex hydrides and corresponds to Comparative Examples 1 and 3, exhibits ionic conductivity suitable for use as an electrolyte for electrochemical cell only at high temperatures of about 120°C or higher. However, it can be seen that as the temperature decreases, the ionic conductivity decreases sharply. In contrast, the superionic conductors of Examples 4, 6 to 8, 14, and 16 to 18, which are composites of the complex hydride and the metal oxide, exhibited a relatively moderate decrease in ionic conductivity as the temperature decreased.

Further, when comparing before and after heat treatment at 25°C, it was observed that Examples 14, 16 to 18 and Comparative Example 3 exhibited improved ionic conductivity after heat treatment. Specifically, in the case of Comparative Example 3, the ionic conductivity increased by about 183% compared with Comparative Example 1 before heat treatment. However, in the cases of Examples 14, 16, 17, and 18, the ionic conductivity was remarkably improved by about 760%, 463%, 451%, and 544%, respectively, compared with that before heat treatment.

Meanwhile, Comparative Example 2 exhibited excellent ionic conductivity compared with Comparative Example 1. However, the ionic conductivity of Comparative Example 4, which corresponds to Comparative Example 2 after heat treatment, was found to decrease by about 99% compared with that before heat treatment.

Accordingly, it can be seen that the superionic conductor, which is a composite of the complex hydride and the metal oxide, exhibits significantly superior ionic conductivity at room temperature compared with conventional complex hydrides, and such ionic conductivity can be further improved through a heat treatment process.

Further, in the case of Comparative Example 2, which does not contain metal oxide, ionic conductivity can be temporarily improved at room temperature only by a simple ball-milling process. However, the improved ionic conductivity decreased sharply when exposed to external environments. That is, it was confirmed that the superionic conductor of the present disclosure, which is a composite of the complex hydride and the metal oxide, stably maintains the improved ionic conductivity.

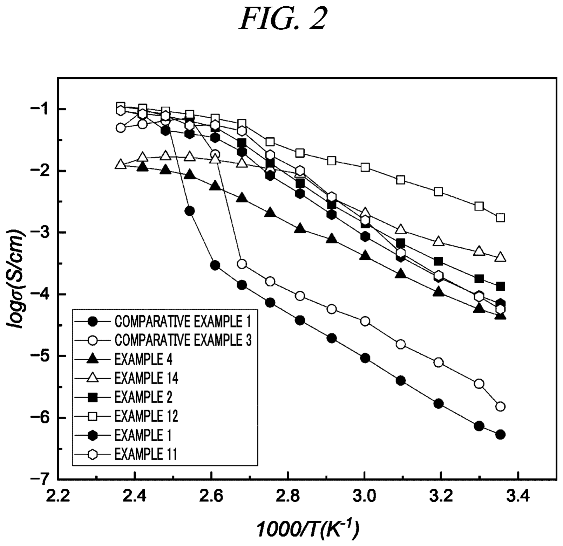

Then, the ionic conductivity of Example 4, which exhibited the highest increase in ionic conductivity after heat treatment in Test Example 1, was measured depending on the mixing ratio of the metal oxide and comparatively analyzed in the same manner as in Test Example 1 (Table 2 and **FIG. 2**).

**[Table 2]**

| Ionic conductivity at 25°C before heat treatment (S/cm) | | Ionic conductivity at 25°C after heat treatment (S/cm) | |
|---|---|---|---|
| Example 1 | 7.04 x 10⁻⁵ | Example 11 | 5.74 x 10⁻⁵ |
| Example 2 | 1.35 x 10⁻⁴ | Example 12 | 1.73 x 10⁻³ |
| Example 3 | 5.65 x 10⁻⁵ | Example 13 | 7.04 x 10⁻⁴ |
| Example 4 | 4.49 x 10⁻⁵ | Example 14 | 3.86 x 10⁻⁴ |
| Example 5 | 3.24 x 10⁻⁵ | Example 15 | 3.04 x 10⁻⁵ |

Referring to **FIG. 2** and Table 2, it was confirmed that, similar to the ionic conductivity depending on the type of metal oxide described above, the composite of the complex hydride and the metal oxide exhibited significantly superior ionic conductivity at all molar ratios compared with the complex hydrides of Comparative Examples 1 and 3. However, when the molar ratio of the metal oxide to the complex hydride was 0.1 mol or less, or 15 mol or more, based on 1 mol of the complex hydride, the improvement of ionic conductivity after heat treatment decreased compared with that before heat treatment. Accordingly, as described above, it was reconfirmed that the metal oxide contained in the superionic conductor can improve the ionic conductivity at room temperature. That is, it was confirmed that when the content of the metal oxide in the superionic conductor was not excessively low or high, the ionic conductivity after heat treatment was significantly improved compared with that of Comparative Examples.

Although not illustrated in the drawings, Examples 9, 10, 19, and 20, in which different complex hydrides were used as raw materials, exhibited improved ionic conductivity, similar to Examples 2 and 12, compared with conventional complex hydrides.

### Test Example 2: Analysis of Crystal Structure of Superionic Conductor

The crystal structure of each of the prepared superionic conductors was confirmed by X-ray diffraction (XRD) analysis (45 kV, 200 mA, 1°/min, Cu-Kα radiation, λ = 0.15406 nm).

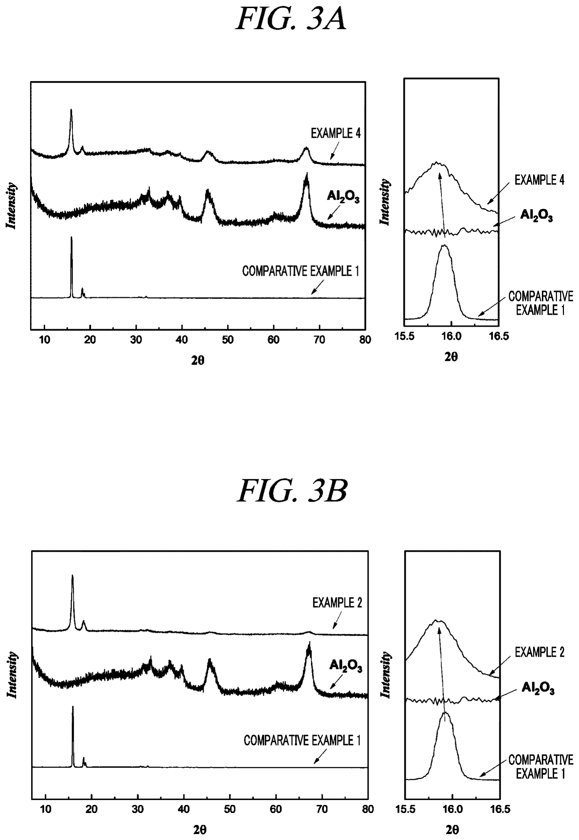

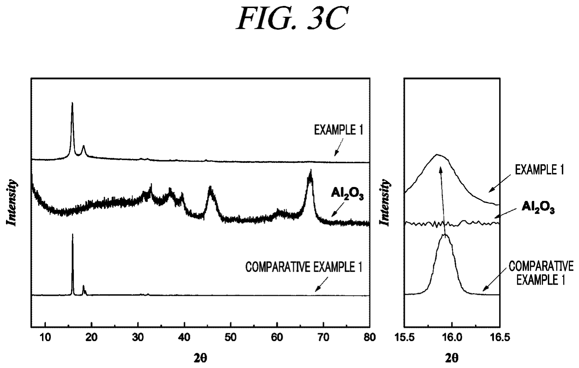

**FIG. 3A, FIG. 3B****,** and **FIG. 3C** are diagrams respectively illustrating XRD measurement results of the superionic conductors of Example 4, Example 2, and Example 1 compared with Comparative Example 1 (LiCB₁₁H₁₂).

Referring to the enlarged peaks on the right side of **FIG. 3A** to **FIG. 3C****,** Comparative Example 1 exhibits a peak at a diffraction angle of 2θ = 15.9°, which corresponds to the (111) plane of LiCB₁₁H₁₂.

Examples 4, 2, and 1 each exhibited a peak at a diffraction angle 2θ smaller by 0.05° or more than the diffraction angle 2θ where the peak corresponding to the (111) plane of LiCB₁₁H₁₂ was observed. Accordingly, it can be understood that, in all compositions, the lattice constant of the superionic conductor of the present disclosure increased as a result of the reaction between the complex hydride, LiCB₁₁H₁₂, and the metal oxide, Al₂O₃.

That is, the superionic conductor of the present disclosure is not a simple mixture of the complex hydride and the metal oxide, but a composite of the complex hydride and the metal oxide.

More specifically, Examples 4, 2, and 1 each exhibited a peak at a diffraction angle 2θ smaller by 0.09°, 0.07°, and 0.10°, respectively, than the diffraction angle 2θ where the peak corresponding to the (111) plane of LiCB₁₁H₁₂ (hereinafter, referred to as "first peak") was observed. Although not shown in the drawings, it was also confirmed that Examples 3 and 5 each exhibited a peak at a diffraction angle 2θ smaller by 0.09°.

The peak of LiCB₁₁H₁₂ at a diffraction angle of about 18.2° was also observed to shift to a smaller diffraction angle by the same extent as the above-described peak.

Further, additional peaks originating from the metal oxide contained in the superionic conductor were identified. In this case, based on the minimum intensity in the XRD pattern over a diffraction angle range of 2θ=10° to 80°, the intensity ratio (I₁/I₂) between the maximum intensity (I₁) of the first peak and the maximum intensity (I₂) of the peak located at a diffraction angle 2θ of 45°, which originates from the metal oxide (hereinafter, referred to as "second peak"), was calculated. As a result, the intensity ratios were about 4.5 for Example 4, about 19.8 for Example 2, and about 49.9 for Example 1.

### (Example 21) Fabrication of All-Solid-State Battery

An electrolyte layer of an electrochemical cell was prepared by pressing the superionic conductor of Example 2. A cathode layer was then prepared by mixing and pressing the superionic conductor powder with a cathode active material (sulfur) and conductive agents (Super P, carbon nanotube). Lithium metal was used as an anode layer to fabricate an all-solid-state battery. Then, charge-discharge tests were conducted at room temperature to confirm that the electrochemical cell operated successfully.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

### INDUSTRIAL APPLICABILITY

When the superionic conductor of the present disclosure is used as a solid electrolyte in an all-solid-state secondary battery, there can be provided an all-solid-state battery having significantly improved energy density, power, and stability.

## Claims

1. An oxyhydride-based superionic conductor, comprising:
a complex hydride containing a cation including an alkali metal or an alkaline earth metal and a hydride-based complex anion; and
a metal oxide,
wherein the oxyhydride-based superionic conductor is a composite of the complex hydride and the metal oxide.

2. The superionic conductor of Claim 1,
wherein the composite is synthesized by a reaction between the complex hydride and the metal oxide to form a defect within a crystal structure of the complex hydride.

3. The superionic conductor of Claim 2,
wherein a molar ratio of the complex hydride to the metal oxide in the composite is 1:0.01 to 20.

4. The superionic conductor of Claim 1,
wherein the composite includes one or more metal oxides selected from MgO, Al₂O₃, SiO₂, and ZrO₂.

5. The superionic conductor of Claim 1,
wherein the composite includes one or more hydride-based complex anions selected from BH₄⁻, B₆H₆²⁻, B₁₀H₁₀²⁻, B₁₁H₁₁²⁻, B₁₂H₁₂²⁻, CB₉H₁₀⁻, CB₁₀H₁₁⁻, and CB₁₁H₁₂⁻.

6. The superionic conductor of Claim 2,
wherein the superionic conductor exhibits a first peak at a diffraction angle of 2θ=15.9±0.5° and a second peak at a diffraction angle of 2θ=45±5° in an X-ray diffraction pattern as measured using CuKα radiation.

7. The superionic conductor of Claim 6,
wherein the first peak originates from the complex hydride and is located at a diffraction angle 2θ smaller by 0.05° or more than the diffraction angle 2θ of the complex hydride before the reaction.

8. The superionic conductor of Claim 6,
wherein the second peak originates from the metal oxide.

9. A method for preparing an oxyhydride-based superionic conductor that is a composite of a complex hydride and a metal oxide, comprising:
(a) a process of mixing, at a predetermined molar ratio, the complex hydride containing a cation including an alkali metal or an alkaline earth metal and a hydride-based complex anion with the metal oxide; and
(b) a process of inducing a reaction between the complex hydride and the metal oxide through a first milling process in which the mixture is mechanically milled.

10. The method for preparing an oxyhydride-based superionic conductor of Claim 9, further comprising:
a second milling process of mechanically milling the complex hydride prior to the mixing process (a).

11. The method of Claim 9, further comprising:
a process of heat treating the composite after the process (b).

12. A solid electrolyte for electrochemical cell, comprising:
a superionic conductor of Claim 1.

13. An electrochemical cell, comprising:
a cathode;
an anode; and
a solid electrolyte containing the superionic conductor of Claim 1, the solid electrolyte being disposed between the cathode and the anode.
